# EUROPEAN PATENT APPLICATION

(11) **EP 1 463 299 A2**
(43) Date of publication of application: **29.09.2004**
(21) Application number: 04004966.0
(22) Date of filing: 03.03.2004
(51) Int. Cl.: H04N 3/15

(54) **Solid-state image sensing apparatus**

(30) Priority: 28.03.2003 JP 2003092487
(71) Applicant: MATSUSHITA ELECTRIC INDUSTRIAL CO., LTD., Kadoma-shi, Osaka 571-8501 (JP)
(72) Inventor: Kasuga, Shigetaka, Hirakata-shi Osaka, 573-1164 (JP); Murata, Takahiro, Osaka-shi Osaka, 559-0015 (JP); Yamaguchi, Takumi, Kyoto-shi Kyoto, 615-0081 (JP)
(74) Representative: Balsters, Robert

(57) **Abstract**

A solid-state image sensing apparatus that can photograph a moving object with no distortion is a solid-state image sensing apparatus that performs photoelectric conversion of incident light comprises: a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal; an electric charge simultaneous removal unit operable to simultaneously remove the accumulated electric charge in the photodiodes laid out in a predetermined region to be read out in the photosensitive unit; and an electric charge accumulation unit operable to accumulate electric charge in the photodiode laid out in the region to be read out during a predetermined time after the accumulated electric charge in the photodiode that is laid out in the region is removed.

## Description

### BACKGROUND OF THE INVENTION

### (1) Field of the Invention

This invention relates to a solid-state image sensing apparatus, and particularly to a solid-state image sensing apparatus that can photograph a moving object with no distortion.

### (2) Description of the Related Art

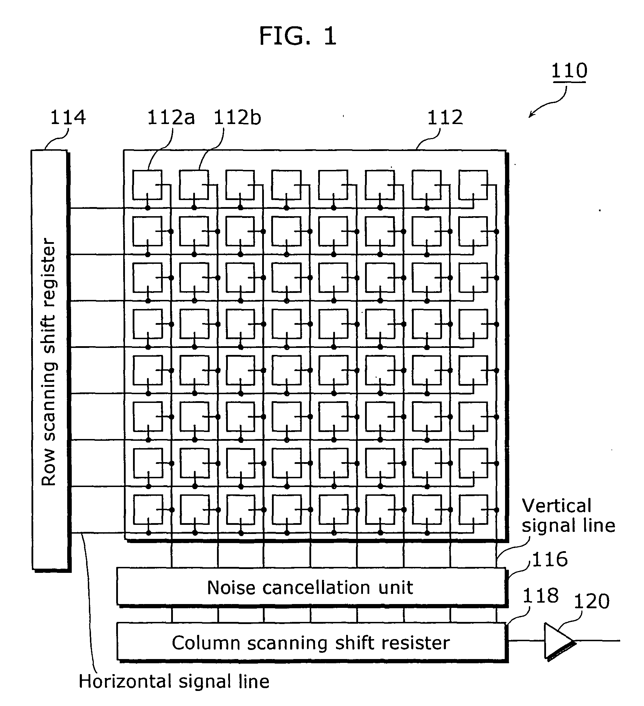

FIG. 1 is a diagram showing a hardware configuration of a general Metal Oxide Semiconductor (MOS) type solid-image sensing apparatus. As is shown in FIG. 1, the solid-state image sensing apparatus 110 includes a pixel unit 112, a row scanning shift register 114, a noise cancellation unit 116, a column scanning shift resister 118, an output amplifier 120 and a plurality of timing generation circuits (not illustrated).

In the pixel unit 112, a plurality of pixels (for example, a pixel 112a and a pixel 112b) is laid out two-dimensionally. Each pixel performs a photoelectric conversion, converts inputted light into an electric signal and outputs the electric signal.

The row scanning shift register 114 is a shift register which is composed of the same number of rows of bits as the rows of pixels laid out in the pixel unit 112. Each bit corresponds to each row of the pixel unit 112 one for one. It is indicated that when bit value of the shift register corresponding to each row is 1 (the potential is at a High level), the pixels of the column are selected; when the bit value is 0 (the potential is at a Low level), the pixels of the column are not selected.

The noise cancellation unit 116 performs noise reduction of electric signals of one row's pixels transmitted through a vertical signal line.

The column scanning shift resister 118 shifts electric signals of one row passed through the noise cancellation unit 116 in the right direction and outputs the electric signals pixel by pixel.

The output amplifier 120 amplifies and outputs the electric signals outputted from the column scanning shift resister 118.

The timing generation circuit is set up for each row, generates various signals, and provides each pixel with the signals. The timing generation circuit is explained in detail later.

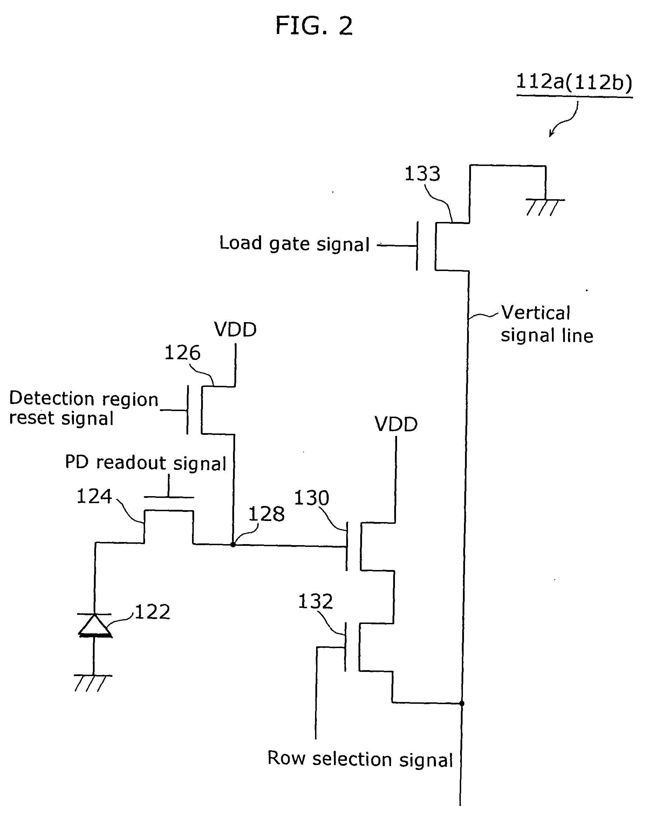

FIG. 2 is a circuit diagram of each pixel that composes of the pixel unit 112 (for example, the pixel 112a and the pixel 112b). As is shown in FIG. 2, each pixel includes a photodiode (hereinafter, referred to as "PD") 122, a MOS-type readout transistor 124, a MOS-type reset transistor 126, a MOS-type signal detection region 128, an amplifier transistor 130, a row selection transistor 132 and a MOS-type load transistor 133.

The PD 122 performs an electric conversion of incident light and accumulates electric charge. The readout transistor 124 reads out the electric charge accumulated in the PD 122 in response to a pulse of a PD readout signal generated by the timing generation circuit.

The signal detection region 128 accumulates the readout electric charge temporarily. The reset transistor 126 initializes potential of the signal detection region 128 to potential of a drain voltage signal VDD in response to a pulse of a detection region reset signal generated by the timing generation circuit.

The amplifier transistor 130 receives, as gate voltage, the voltage in proportion to electric charge of PD 122 that has passed the readout transistor 124 and that is accumulated in the signal detection region 128, and lets the current in proportion to said gate voltage pass through.

The row selection transistor 132 outputs the electric current that has passed the amplifier transistor 130 to the vertical signal line in response to a pulse of the row selection signal generated by the timing generation circuit.

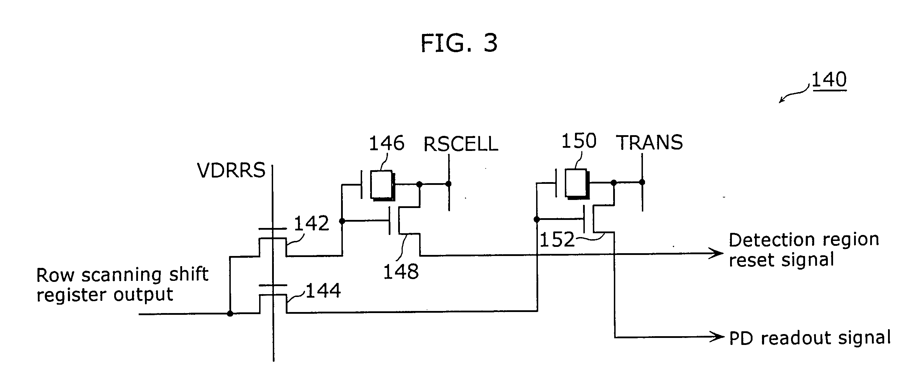

FIG. 3 is a circuit diagram showing an example of a timing generation circuit. As is described above, a timing generation circuit 140 is set up for each row of the pixel unit 112. The timing generation circuit 140 shown in FIG. 3 includes MOS-type transistors 142, 144, 148 and 152; bootstrap circuits 146 and 150.

Each of the transistors 142 and 144 receives a multiplexer precharge signal VDRRS in the gate and lets output of the row scanning shift register 114 pass through when the multiplexer precharge signal VDRRS reaches the High level.

Each of the bootstrap circuits 146 and 150 is configured by connecting a drain and a source of an NMOS-type transistor and fulfills a function as a capacitor that accumulates electric charge by applying potential to the gate. The output voltage of the row scanning shift register 114 that has passed through the transistor 142 is applied to the gate of the bootstrap circuit 146. The output voltage of the row scanning shift register 114 that has passed through the transistor 144 is applied to the gate of the bootstrap circuit 150.

The transistor 148 is an NMOS-type transistor. Its gate is connected to the bootstrap circuit 146; its drain is connected to the drain and the source of the bootstrap circuit 146. When the electric charge is accumulated in the bootstrap circuit 146 and the bootstrap circuit 146 becomes charged, voltage of the gate potential of the transistor 148 rises. Therefore, when the bootstrap circuit 146 becomes charged, the gate potential of the transistor 148 further rises because of a detection region reset signal RSCELL inputted from the drain of the transistor 148; the detection region reset signal RSCELL passes through the source without voltage drop. The detection region reset signal RSCELL, which has passed through the source of the transistor 148, is applied to the gate of the reset transistor 126 of each pixel in a row assigned to the timing generation circuit 140..

The transistor 152 is an NMOS-type transistor. Its gate is connected to the bootstrap circuit 150; its drain is connected to the drain and the source of the bootstrap circuit 150. When the electric charge is accumulated in the bootstrap circuit 150 and the bootstrap circuit 150 becomes charged, voltage of the gate potential of the transistor 152 rises. Therefore, when the bootstrap circuit 150 becomes charged, the gate potential of the transistor 152 further rises because of a PD readout signal TRANS inputted from the drain of the transistor 152; the PD readout signal TRANS passes through the source without voltage drop. The PD readout signal TRANS, which has passed the source of the transistor 152, is applied to the gate of the readout transistor 124 of each pixel in a row assigned to the timing generation circuit 140.

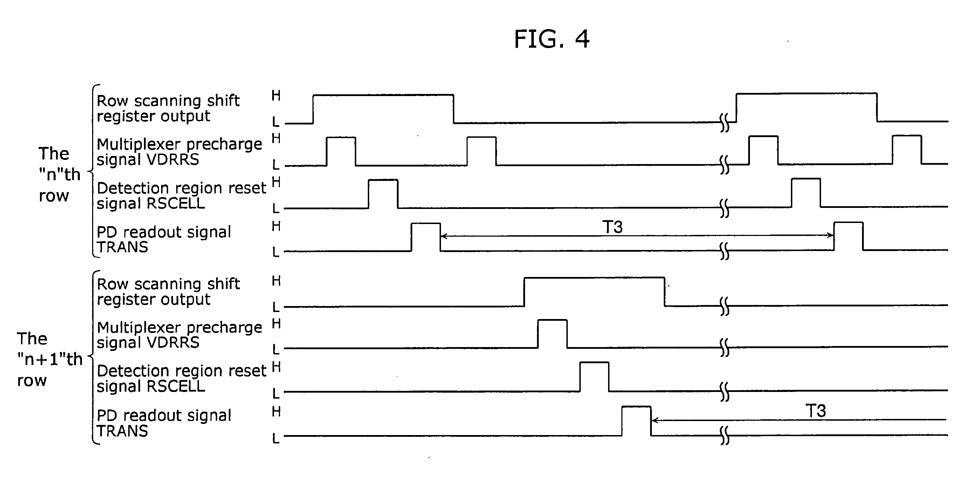

FIG. 4 is a timing diagram of the timing generation circuit 140 shown in FIG. 3. The timing diagram shown in FIG. 4 indicates timings of signals of a certain row (the "n"th row) and the next row (the "n+1"th row).

Focusing attention on the "n"th row, when output of the row scanning shift register 114 reaches the High level, a pulse of the multiplexer precharge signal VDRRS at the High level is applied to the gates of the transistors 142 and 144 for a predetermined time. During the predetermined time, electric charge is accumulated in the bootstrap circuits 146 and 150; the bootstrap circuits 146 and 150 become charged. After that, a pulse of the detection region reset signal RSCELL passes through the transistor 148 and is applied to the gate of the reset transistor 126 of each pixel shown in FIG. 2. Then, the potential of the signal detection region 128 is initialized to the potential of the drain voltage signal VDD. After that, a pulse of a PD readout signal TRANS passes through the transistor 152 and is applied to the gate of the readout transistor 124 of each pixel. Then, the electric charge accumulated in the PD 122 is read out, passes through the readout transistor 124 and is accumulated in the signal detection region 128.

At this time, the electric charge accumulated in the PD 122 has been discharged. Therefore, accumulation of electric charge to the PD 122 starts at the trailing edge of a pulse of the PD readout signal TRANS.

On the other hand, when output of the row scanning shift register 114 becomes the Low level, a pulse of a multiplexer precharge signal VDRRS is applied to the transistors 142 and 144. Hereby, the electric charge accumulated in bootstrap circuits 146 and 150 is discharged.

After that, a shift by one bit of the value held in the row scanning shift register 114 causes the timing generation circuit 140 for the "n+1"th row to generate a similar signal. Likewise, the PD 122 of each pixel in the "n+1"th row starts to accumulate electric charge.

Again, focusing attention on the "n"th row, the timing generation circuit 140 outputs a similar signal described above at a phase where output of the row scanning shift register 114 becomes the High level. When a pulse of a PD readout signal TRANS passes through the transistor 152 and is applied to the gate of the readout transistor 124, the electric charge that has been accumulated in the PD 122 is read out, passes through the transistor 124 and is accumulated in the signal detection region 128. By applying the potential of the signal detection region 128 to the amplifier transistor 130, the electric current in proportion to the accumulated electric charge of the PD 122 passes through the amplifier transistor 130. At the time, a row selection signal (not illustrated in FIG. 3 and FIG. 4) is applied to the row selection transistor 132 and said electric current flows in the load transistor 133 through a vertical signal line. The voltage of the vertical line at this time is inputted into the noise cancellation unit 116.

In other words, time T3 for accumulating the electric charge to the PD 122 is the time from the trailing edge of a pulse of a PD readout signal TRANS until the leading edge of the next pulse.

As is described above, a conventional solid-state image sensing apparatus accumulates electric charge for each row, sifting value held by the row scanning shift register 114 in sequence, and takes a photograph of an object. (For example, refer to Japanese Laid-Open Patent application No. 08-182005.)

However, the conventional solid-state image sensing apparatus accumulates electric charge to a PD by sifting every row. Whereby, there is a problem that a photograph has a distortion when a photograph of a moving object is taken.

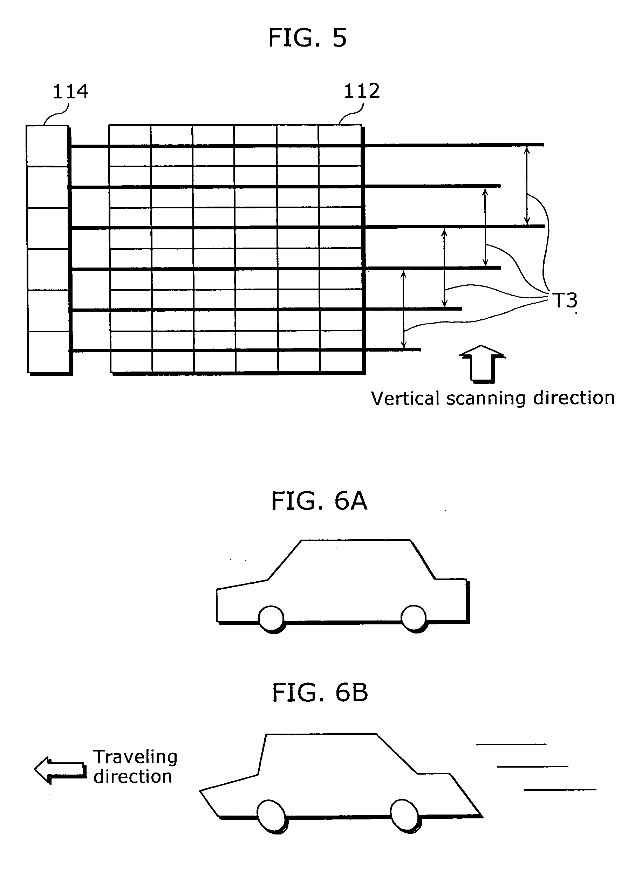

This problem is explained using figures. FIG. 5 is a diagram to explain a gap of electric charge accumulation time for each row. The solid-state image sensing apparatus 110 starts to accumulate electric charge for every row in sequence in a vertical scanning direction using output of the row scanning shift register 114 and detects accumulated electric charge for every row in sequence after the time T3 has passed. As is described above, the start timing for accumulating electric charge is different for each row. Therefore, it is possible to take a photograph with no distortion as shown in FIG. 6A when a stationary object such as a car that is not moving is photographed. But a photograph has a distortion as shown in FIG. 6B when a moving object such as a moving car is photographed.

### SUMMARY OF THE INVENTION

Accordingly, the present invention is available to solve the problem and it is the object of the present invention to provide a solid-state image sensing apparatus that makes it possible to take a photograph of a moving object with no distortion.

In order to achieve the above-mentioned object, the solid-state image sensing apparatus according to the present invention is a solid-state image sensing apparatus that performs photoelectric conversion of incident light, comprising: a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal; an electric charge simultaneous removal unit operable to simultaneously remove the accumulated electric charge in the photodiodes laid out in a predetermined region to be read out in the photosensitive unit; and an electric charge accumulation unit operable to accumulate electric charge in the photodiode laid out in the region to be read out during a predetermined time after the accumulated electric charge in the photodiode that is laid out in the region is removed.

This configuration makes it possible to remove simultaneously accumulated electric charge in the photodiode laid out in the predetermined region to be read out in the photosensitive unit. Consequently, it is possible to start simultaneously and end simultaneously electric charge accumulation to the photodiode laid out in said region to be read out. Therefore, it is possible to photograph a moving object with no distortion.

For example, it is acceptable that the electric charge accumulation unit generates an electric accumulation start signal to start electric charge accumulation to the photodiode laid out in the region to be read out.

This configuration makes it possible to control the start of electric charge accumulation based on the electric signal.

Additionally, it is satisfactory that the solid-state image sensing apparatus further comprises an incident light control unit operable to control incidence of light into the photosensitive unit, wherein the electric charge accumulation unit starts incidence of light to the photosensitive unit using the incident light control unit after the electric charge simultaneous removal unit simultaneously removes the accumulated electric charge to the photodiode laid out in the region to be read out.

This configuration makes it possible to control the start of electric charge accumulation by a mechanical method such as a shutter.

Preferably, it is acceptable that the solid-state image sensing apparatus further comprises an electric signal readout unit operable to read out the electric signal outputted from the photoelectric conversion circuit laid out in the region to be read out, and that the electric signal readout unit reads out simultaneously accumulated electric charge of the photodiode laid out in the region to be read out.

Hereby, it is possible to provide a solid-state image sensing apparatus that operates at a high speed.

The camera according to another aspect of the present invention is a camera that photographs an object comprising a solid-state image sensing apparatus; and a mechanical shutter, wherein the solid-state image sensing apparatus includes: a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal; an electric charge simultaneous removal unit operable to simultaneously remove the accumulated electric charge in the photodiode laid out in a predetermined region to be read out in the photosensitive unit; an electric charge accumulation unit operable to accumulate electric charge in the photodiode laid out in the region to be read out during a predetermined time after accumulated electric charge in the photodiode that is laid out in the region is removed; and an incident light control unit operable to control incidence of light into the photosensitive unit, wherein the mechanical shutter is set up between the photosensitive unit of the solid-state image sensing apparatus and an object to be photographed, the electric charge accumulation unit ends electric charge accumulation to the photodiode laid out in the region to be read out using the incident light control unit by blocking out incidence of light into the photosensitive unit, and the incident light control unit controls incidence of light into the photosensitive unit by controlling opening and shutting of the mechanical shutter.

This configuration makes it possible to remove simultaneously accumulated electric charge in the photodiode laid out in the predetermined region to be read out in the photosensitive unit. Consequently, it is possible to start simultaneously and end simultaneously electric charge accumulation to the photodiode laid out in said region to be read out. Therefore, it is possible to photograph a moving object with no distortion.

The image sensing method according to yet another aspect of the present invention is an image sensing method for photographing an object using a solid-state sensing apparatus, wherein the solid-state image sensing apparatus includes a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal, and the image sensing method comprising the steps of: simultaneously removing the accumulated electric charge in the photodiode laid out in a predetermined region to be read out in the photosensitive unit; and accumulating electric charge in the photodiode laid out in the region to be read out during a predetermined time after the accumulated electric charge of the photodiode that is laid out in the region is removed.

This method makes it possible to remove simultaneously accumulated electric charge in the photodiode laid out in the predetermined region to be read out in the photosensitive unit. Consequently, it is possible to start simultaneously and end simultaneously electric charge accumulation to the photodiode laid out in said region to be read out. Therefore, it is possible to photograph a moving object with no distortion.

As further information about technical background to this application, Japanese patent application No. 2003-092487 filed on March 28, 2003 is incorporated herein by reference.

### BRIEF DESCRIPTION OF THE DRAWINGS

These and other subjects, advantages and features of the invention will become apparent from the following description thereof taken in conjunction with the accompanying drawings that illustrate a specific embodiment of the invention. In the Drawings:
FIG. 1 is a diagram showing a hardware configuration of a general MOS type solid-image sensing apparatus;
FIG. 2 is a circuit diagram of each pixel that composes of the pixel unit;
FIG. 3 is a circuit diagram showing an example of a timing generation circuit;
FIG. 4 is a timing diagram of the timing generation circuit shown in FIG. 3;
FIG. 5 is a diagram to explain a gap of electric charge accumulation time for each row;
FIG. 6A is a diagram showing an example of a picture obtained by photographing a stationary object;
FIG. 6B is a diagram showing an example of a picture obtained by photographing a moving object;
FIG. 7 is a circuit diagram showing an example of a timing generation circuit according to the First Embodiment;
FIG. 8 is a timing diagram of the timing generation circuit shown in FIG. 7;
FIG 9 is a circuit diagram showing an example of a timing generation circuit according to the Second Embodiment;
FIG. 10 is a circuit diagram of each pixel that composes of the pixel unit according to the Second Embodiment;
FIG. 11 is a timing diagram of the timing generation circuit shown in FIG. 10;
FIG. 12 is a diagram showing another example of timing of the timing generation circuit shown in FIG 7;
FIG. 13 is a diagram explaining a start and an end of electric charge accumulation according to the First and Second Embodiments;
FIG. 14 is a diagram explaining another example of the start and the end of electric charge accumulation;
FIG. 15 is a diagram explaining yet another example of the start and the end of electric charge accumulation;
FIG. 16 is a diagram explaining still another example of the start and the end of electric charge accumulation;
FIG. 17(a) is a diagram showing a timing of opening and closing of the mechanical shutter;
FIG. 17(b) is a diagram showing a PD readout signal TRANS;
Each of FIG. 17(c)~FIG. 17(f) is a diagram showing a detection region reset signal RSCELL;
FIG. 18A is a diagram showing the pixel unit of the solid-state image sensing apparatus in front part of which a mechanical shutter is set up;
FIG. 18B is a diagram showing the pixel unit of the solid-state image sensing apparatus in front part of which a liquid crystal shutter is set up;
FIG. 18C is a diagram showing the pixel unit of the solid-state image sensing apparatus in front part of which nothing is set up; and
FIG. 19 is a diagram showing an equivalent circuit to a timing generation circuit using a CMOS-type transistor.

### DESCRIPTION OF THE PREFERRED EMBODIMENT(S)

### (The First Embodiment)

The hardware configuration of a MOS-type solid-state sensing apparatus according to the First Embodiment of the present invention is similar to the hardware configuration of the conventional solid-state sensing apparatus 110 explained in reference to FIG. 1. Therefore, its detailed explanation is not repeated here. However, the hardware configuration of a plurality of timing generation circuits which is not illustrated in FIG. 1 is different from the conventional hardware configuration.

By the way, in font of the pixel unit 112 of the solid-state image sensing apparatus 110 according to the present embodiment, a mechanical shutter (not illustrated) and a mechanical shutter control unit (not illustrated) are set up; incidence of light to the pixel unit 112 is controlled by opening and shutting of the mechanical shutter.

A hardware configuration of each pixel that composes of the pixel unit 112 is similar to the hardware configuration explained in reference to FIG. 2. Therefore, its detailed explanation is not repeated here.

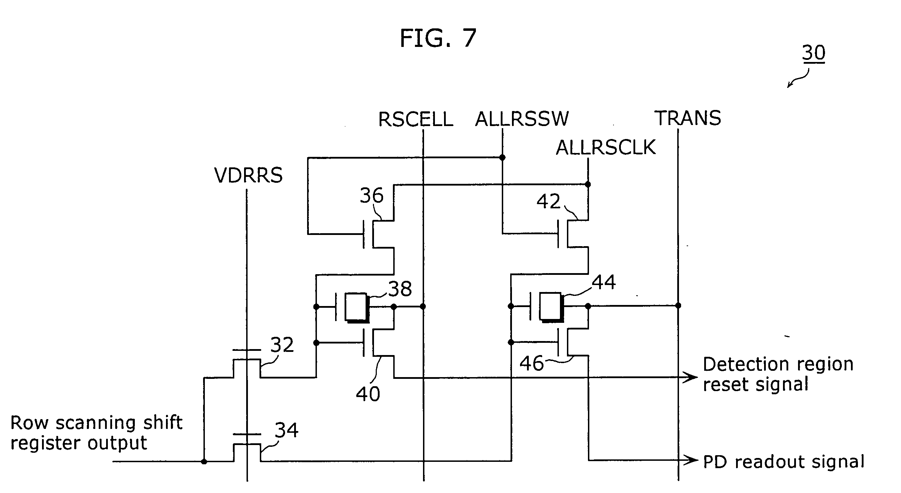

FIG. 7 is a circuit diagram showing an example of a timing generation circuit. The timing generation circuit 30 is set up for each row of the pixel unit 112. The timing generation circuit 30 shown in FIG. 7 includes MOS-type transistors 32, 34, 36, 40, 42 and 46; and bootstrap circuits 38 and 44.

Each of the transistors 32 and 34 receives a multiplexer precharge signal VDRRS in the gate and lets output of the row scanning shift register 114 pass through when potential of the multiplexer precharge signal VDRRS reaches the High level.

Each of the transistors 36 and 42 receives an all pixel reset switch signal ALLRSSW in the gate and lets an all pixel reset signal ALLRSCLK pass through when the all pixel reset switch signal ALLSSW reaches the High level.

Each of the bootstrap circuits 38 and 44 is configured by connecting a drain and a source of an NMOS-type transistor and fulfills a function as a capacitor that accumulates electric charge by applying potential to the gate. To the gate of the bootstrap circuit 38 is applied: the output voltage of the row scanning shift register 114 that has passed through the transistor 32 or the all pixel reset signal ALLRSCLK that has passed through the resistor 36. To the gate of the bootstrap circuit 44 is applied: the output voltage of the row scanning shift register 114 that has passed through the transistor 34 or the all pixel reset signal ALLRSCLK that has passed through the transistor 42.

The transistor 40 is an NMOS-type transistor. Its gate is connected to the bootstrap circuit 38; its drain is connected to the drain and the source of the bootstrap circuit 38. When the electric charge is accumulated in the bootstrap circuit 38 and the bootstrap circuit 38 becomes charged, voltage of the gate potential of the transistor 40 rises. Therefore, when the bootstrap circuit 38 becomes charged, the gate potential of the transistor 40 further rises because of a detection region reset signal RSCELL inputted from the drain of the transistor 40; the detection region reset signal RSCELL passes through the source without voltage drop. The detection region reset signal RSCELL, which has passed the source of the transistor 40, is applied to the gate of the reset transistor 126 of each pixel in a row assigned to the timing generation circuit 30.

The transistor 46 is an NMOS-type transistor. Its gate is connected to the bootstrap circuit 44; its drain is connected to the drain and the source of the bootstrap circuit 44. When the electric charge is accumulated in the bootstrap circuit 44 and the bootstrap circuit 44 becomes charged, voltage of the gate potential of the transistor 46 rises. Therefore, when the bootstrap circuit 44 becomes charged, the gate potential of the transistor 46 further rises because of a PD readout signal TRANS inputted from the drain of the transistor 46; the PD readout signal TRANS passes through the source without voltage drop. The PD readout signal TRANS, which has passed through the source of the transistor 46, is applied to the gate of the readout transistor 124 of each pixel in a row assigned to the timing generation circuit 30.

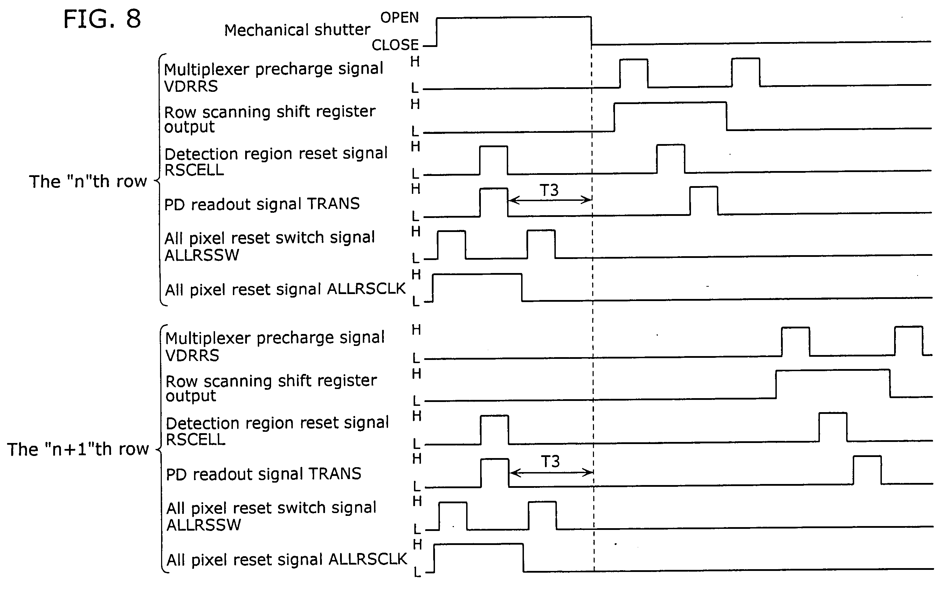

FIG. 8 is a timing diagram of the timing generation circuit 30. The timing diagram shown in FIG. 8 indicates timings of signals of a certain row (the "n"th row) and the next row (the "n+1"th row).

Focusing attention on the "n"th row, when the all pixel reset signal ALLRSCLK reaches the High level, a pulse of the all pixel reset switch signal ALLRSSW at the High level is applied to the gates of the transistors 36 and 42 for a predetermined time. During the predetermined time, electric charge is accumulated in the bootstrap circuits 38 and 44; the bootstrap circuits 38 and 44 become charged.

After that, a pulse of a PD readout signal TRANS passes through the transistor 46 and is applied to the gate of the readout transistor 124 of each pixel shown in FIG. 2. Then, the electric charge accumulated in the PD 122 is read out, passes through the transistor 124 and is accumulated in the signal detection region 128. At this time, the electric charge accumulated in the PD 122 has been discharged.

Additionally, a pulse of a detection region reset signal RSCELL passes through the transistor 40 at the same time with a pulse of a PD readout signal TRANS and is applied to the gate of the reset transistor 126 of each pixel. Then, the potential of the signal detection region 128 is initialized to the potential of the drain voltage signal VDD.

Moreover, at the trailing edge of a pulse of a PD readout signal TRANS, a mechanical shutter is open (OPEN state). Therefore, accumulation of electric charge to the PD 122 starts at the trailing edge of a pulse for a PD readout signal TRANS and ends at the time when the mechanical shutter is closed. This duration is time T3, electric charge accumulation time to PD 122.

Additionally, after the trailing edge of pulse of an all pixel reset switch signal ALLSSW, the all pixel reset signal ALLRSCLK is made to be the Low level. Further, after the trailing edges of a detection region reset signal RSCELL and a PD readout signal TRANS and at the time when an all pixel reset signal ALLRSCLK is the Low level, a pulse of the all pixel reset switch signal ALLSSW is applied to the gates of the transistors 36 and 42. Hereby, the electric charge accumulated in bootstrap circuits 38 and 44 is discharged.

By the way, the detection region reset signal RSCELL, the PD readout signal TRANS, the all pixel reset switch signal ALLSSW and the all pixel reset signal ALLRSCLK, which are explained above, are same in the timing generation circuits 30 of all the rows.

Therefore, it is configured so that the start timing and the end timing of time T3, the electric charge accumulation time to the PD 122 agree in all the pixels in the pixel unit 112.

After time T3, the electric charge accumulation time to the PD 122, has passed, the electric charge accumulated in the PD 122 is read out row-by-row by shifting the value of the row scanning shift register 114 in sequence.

When output of the row scanning shift register 114 of the "n"th row reaches the High level, a pulse of the multiplexer precharge signal VDRRS at the High level is applied to the gates of the transistors 32 and 34 for a predetermined time. During the predetermined time, electric charge is accumulated in the bootstrap circuits 38 and 44; the bootstrap circuits 38 and 44 become charged. After that, a pulse of the detection region reset signal RSCELL passes through the transistor 40 and is applied to the gate of the reset transistor 126 of each pixel shown in FIG. 2. Then, the potential of the signal detection region 128 is initialized to the potential of the drain voltage signal VDD. After that, a pulse of a PD readout signal TRANS passes through the transistor 46 and is applied to the gate of the readout transistor 124 of each pixel. Then, the electric charge accumulated in the PD 122 is read out, passes through the readout transistor 124 and is accumulated in the signal detection region 128. By applying the potential of the signal detection region 128 to the amplifier transistor 130, the electric current in proportion to the accumulated electric charge of the PD 122 passes through the amplifier transistor 130. At the time, a row selection signal (not illustrated in FIG. 7 and FIG. 8) is applied to the row selection transistor 132 and said electric current flows into the load transistor 133 through a vertical signal line. The voltage of the vertical line at this time is inputted into the noise cancellation unit 116.

After noise reduction is performed in the noise cancellation unit 116 to electric current inputted to the noise cancellation unit 116 in proportion to the "n"th row of the PD 122, the electric current is outputted pixel-by-pixel from the output amplifier 120 through the column scanning shift resister 118.

When output of the row scanning shift register 114 becomes the Low level, a pulse of a multiplexer precharge signal VDRRS is applied to the transistors 32 and 44. Hereby, the electric charge accumulated in bootstrap circuits 38 and 44 is discharged.

When readout of the pixels in the "n"th row has finished, similar readout of the pixels of the "(n+1)"th row is performed. In this way, the readout of the pixels is performed row-by-row from the first row through the last row.

As is described above, according to the First Embodiment, a mechanical shutter is left to be open; a pulse of a PD readout signal TRANS is applied to the gates of the readout transistors 124 of all the pixels at the same time. Hereby, the electric charge accumulated in the PDs 122 of all the pixels is discharged at the same time; from the instant, the accumulation of electric charge to the PDs 122 starts. Additionally, the accumulation of electric charge to the PDs 122 ends for the all pixels at the same time by closing the mechanical shutter. Therefore, the start timing and the end timing of the accumulation of electric charge to the PDs 122 for all the pixels agree. Consequently, it is possible to take a photograph with no distortion even if the object is moving.

### (The Second Embodiment)

Next, a MOS-type solid-state image sensing apparatus according to the Second Embodiment of the present invention is explained. The hardware configuration of the MOS-type solid-state sensing apparatus according to the Second Embodiment of the present invention is similar to the hardware configuration of the conventional solid-state sensing apparatus 110 explained in reference to FIG. 1. Therefore, its detailed explanation is not repeated here. However, the configuration of each pixel (for example, pixel 112a and the pixel 112b) is different from the conventional configuration. Additionally, the hardware configuration of a plurality of timing generation circuits which is not illustrated in FIG. 1 is different from the conventional hardware configuration.

By the way, in front of the pixel unit 112 of the solid-state image sensing apparatus 110 according to the present embodiment, similarly to the solid-state image sensing apparatus 110 according to the First Embodiment, a mechanical shutter (not illustrated) is set up and incidence of light to the pixel unit 112 is controlled by opening and shutting of the mechanical shutter.

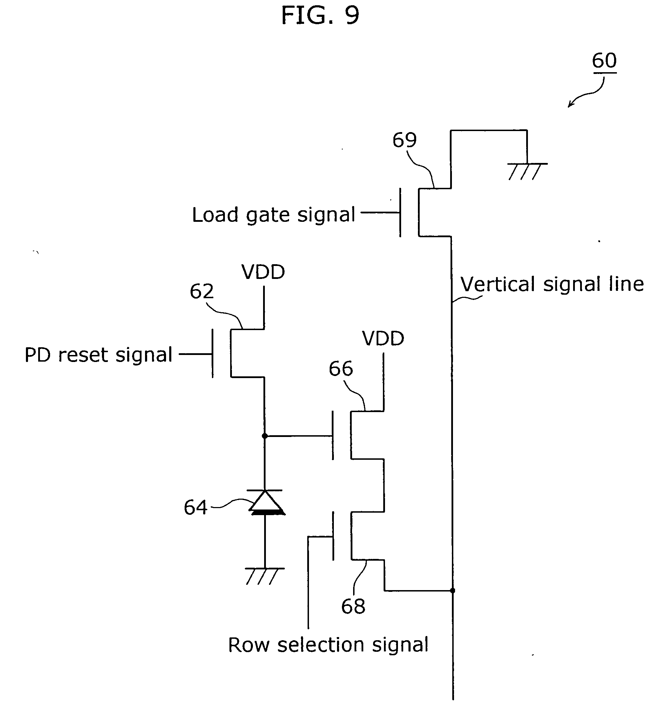

FIG. 9 is a circuit diagram of each pixel that composes of the pixel unit 112. As is shown in FIG. 9, each pixel 60 includes a PD 64, a MOS-type reset transistor 62, a MOS-type amplifier transistor 66, a MOS-type row selection transistor 68 and a MOS-type load transistor 69.

The PD 64 performs an electric conversion of incident light and accumulates electric charge.

The reset transistor 62 discharges the electric charge accumulated in the PD 64 in response to a pulse of a PD reset signal generated by the timing generation circuit.

The amplifier transistor 66 receives, as gate voltage, the voltage in proportion to electric charge that is accumulated in the PD64 and lets the current in proportion to said gate voltage pass through.

The row selection transistor 68 outputs the electric current that has passed the amplifier transistor 66 to the vertical signal line in response to a pulse of the row selection signal generated by the timing generation circuit.

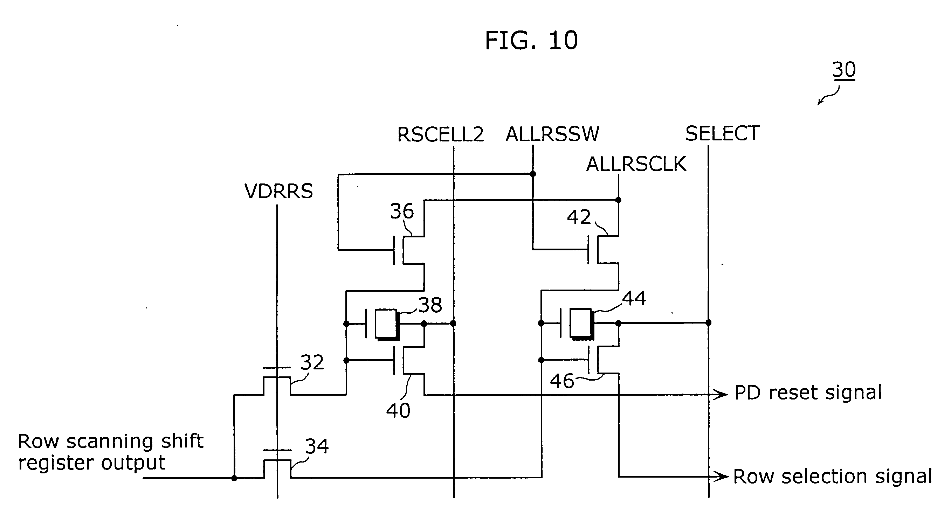

FIG. 10 is a circuit diagram showing an example of a timing generation circuit. The timing generation circuit 30 is set up for each row of the pixel unit 112. The timing generation circuit 30 shown in FIG. 10 has a similar hardware configuration to the hardware configuration of the timing generation circuit 30 shown in FIG. 7. However, a row selection signal SELECT is used instead of a PD readout signal TRANS; a PD reset signal RSCELL2 is used instead of a detection region reset signal RSCELL. Therefore, signals outputted by the transistors 40 and 46 are different from those of the First Embodiment. The other components of the configuration are similar to those of the timing generation circuit 30 shown in FIG. 7. Therefore, its detailed explanation is not repeated here.

The transistor 40 performs similar actions to the transistor 40 shown in FIG. 7 but a PD reset signal RSCELL2, which has passed the source of the transistor 40, is applied to the gate of the reset transistor 62 of the pixel 60 in a row assigned to the timing generation circuit 30.

The transistor 46 performs similar actions to the transistor 40 shown in FIG. 7 but the row selection signal SELECT, which has passed the source of the transistor 40, is applied to the gate of the row selection transistor 68 of the pixel 60 in a row assigned to the timing generation circuit 30.

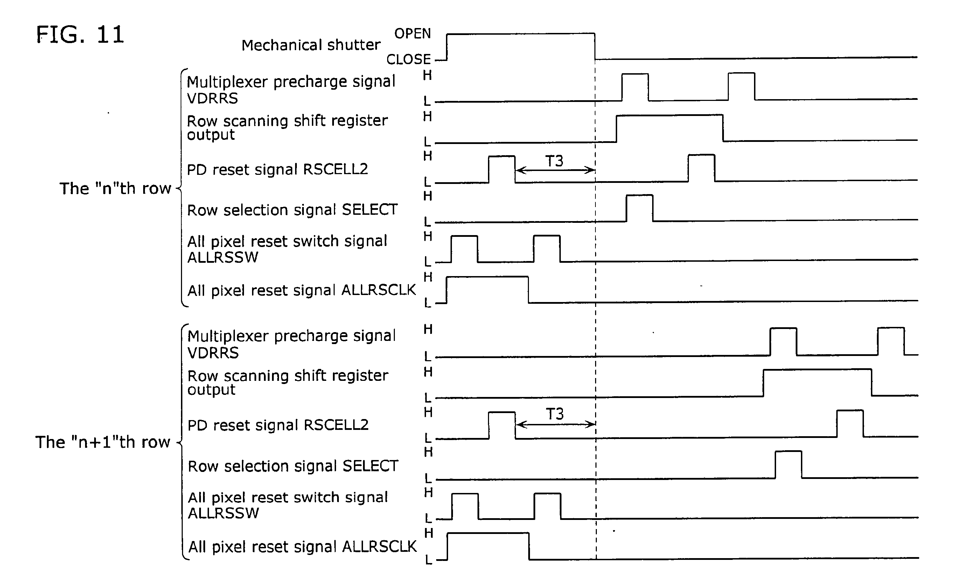

FIG. 11 is a timing diagram of the timing generation circuit 30. The timing diagram shown in FIG. 11 indicates timings of signals of a certain row (the "n"th row) and the next row (the "n+1"th row).

Focusing attention on the "n"th row, when the all pixel reset signal ALLRSCLK reaches the High level, a pulse of the all pixel reset switch signal ALLRSSW at the High level is applied to the gates of the transistors 36 and 42 for a predetermined time. During the predetermined time, electric charge is accumulated in the bootstrap circuits 38 and 44; the bootstrap circuits 38 and 44 become charged.

After that, a pulse of a PD reset signal RSCELL2 passes through the transistor 40 and is applied to the gate of the reset transistor 62 of each pixel 60 shown in FIG. 9. Then, the electric charge accumulated in the PD 64 is discharged.

At the trailing edge of a pulse of a PD reset signal RSCELL2, a mechanical shutter is open. Therefore, accumulation of electric charge to the PD 64 starts at the trailing edge of a pulse of a PD reset signal RSCELL2 and ends at the time when the mechanical shutter is closed. This duration is time T3, electric charge accumulation time to PD64.

Additionally, after the trailing edge of pulse of an all pixel reset switch signal ALLSSW, the all pixel reset signal ALLRSCLK is made to be the Low level. Further, after the trailing edges of a PD reset signal RSCELL2 and at the time when an all pixel reset signal ALLRSCLK is the Low level, a pulse of the all pixel reset switch signal ALLSSW is applied to the gates of the transistors 36 and 42. Hereby, the electric charge accumulated in bootstrap circuits 38 and 44 is discharged.

By the way, the PD reset signal RSCELL2, the all pixel reset switch signal ALLSSW and the all pixel reset signal ALLRSCLK, which are explained above, are same in the timing generation circuits 30 of all the rows.

Therefore, it is configured so that the start timing and the end timing of time T3, the electric charge accumulation time to the PD 64 agree in all the pixels 60 in the pixel unit 112.

After time T3 for accumulating electric charge to the PD 64 has passed, the electric charge accumulated in the PD 64 is read out row-by-row by shifting the value of the row scanning shift register 114 in sequence.

When output of the row scanning shift register 114 of the "n"th row reaches the High level, a pulse of the multiplexer precharge signal VDRRS at the High level is applied to the gates of the transistors 32 and 34 for a predetermined time. During the predetermined time, electric charge is accumulated in the bootstrap circuits 38 and 44; the bootstrap circuits 38 and 44 become charged. After that, a pulse of the row selection signal SELECT passes through the transistor 46 and is applied to the gate of the row selection transistor 68 of each pixel 60 shown in FIG. 9. Since voltage in proportion to accumulated electric charge to PD 64 is applied to the gate of the amplifier transistor 66, electric current in proportion to accumulated electric charge to PD 64 passes through the amplifier transistor 66. Therefore, the row selection signal SELECT is applied to the gate of the row selection transistor 68. As a result, electric current in proportion to accumulated electric charge of PD 64 passes through the row selection transistor 68 and flows into the load transistor 69 through a vertical signal line. The voltage of the vertical line at this time is inputted into the noise cancellation unit 116.

After noise reduction is performed in the noise cancellation unit 116 to electric current inputted to the noise cancellation unit 116 in proportion to the "n"th row of the PD 122, the electric current is outputted pixel-by-pixel from the output amplifier 120 through the column scanning shift resister 118.

When output of the row scanning shift register 114 becomes the Low level, a pulse of a multiplexer precharge signal VDRRS is applied to the transistors 32 and 34. Hereby, the electric charge accumulated in bootstrap circuits 38 and 44 is discharged.

When readout of the pixels in the "n"th row has finished, similar readout of the "(n+1)"th row is performed. In this way, the readout of the pixels is performed row-by-row from the first row through the last row.

As is described, according to the Second Embodiment, a mechanical shutter is left to be open; a pulse of a PD reset signal RSCELL2 is applied to the gates of the reset transistors 62 of all the pixels 60 at the same time. Hereby, the electric charge accumulated in the PDs 64 of all the pixels is discharged at the same time; from the instant, the accumulation of electric charge to the PD 64 starts. Additionally, the accumulation of electric charge to the PD 64 ends for the all pixels at the same time by closing the mechanical shutter. Therefore, the start timing and the end timing of the accumulation of electric charge to the PD 64 for all the pixels agree. Consequently, it is possible to take a photograph with no distortion even if the object is moving.

The solid-state image sensing apparatus according to the present invention has been explained using the embodiments, but the present invention is not limited to these embodiments.

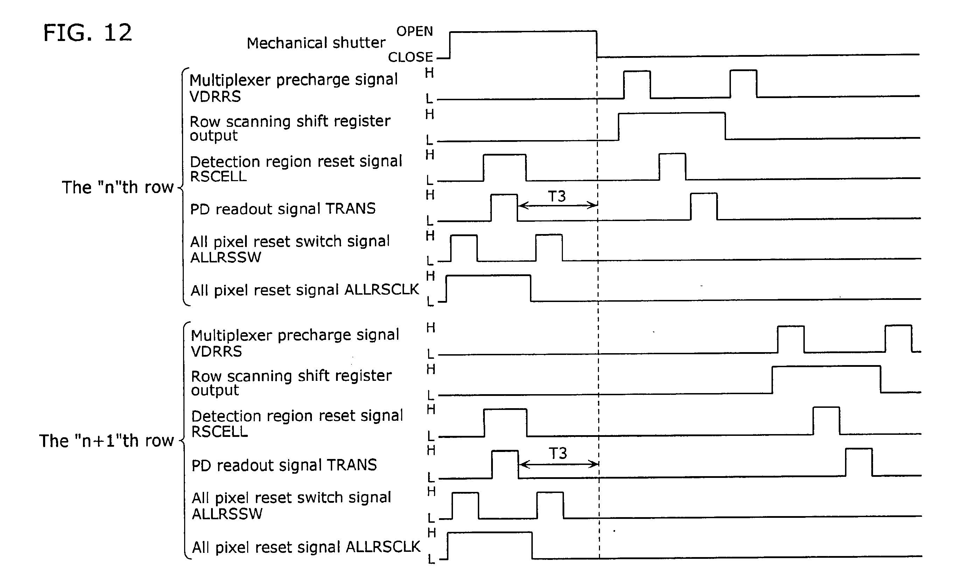

For example, according to the First Embodiment, in the timing diagram of the timing production 30 shown in FIG. 8, the timings of pulses of a detection region reset signal RSCELL and a PD readout signal TRANS are aligned. However, as shown in FIG. 12, it is acceptable that the width of a pulse of a detection region reset signal RSCELL is wider than the width of a PD readout signal TRANS and that the pulse of the detection region reset signal RSCELL is applied to the signal detection region 128 shown in FIG. 2 before or after the PD readout signal TRANS. Hereby, it is possible to discharge completely the electric charge accumulated in the PD 122.

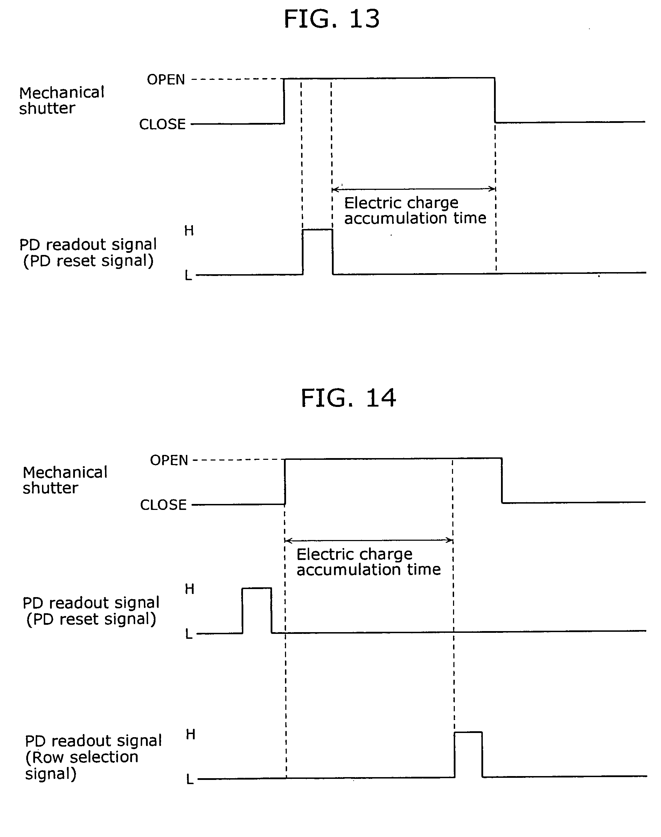

Additionally, according to the First Embodiment and the Second Embodiment, as shown in FIG. 13, accumulation of electric charge to the PD 122 (64) starts at the trailing edge of a PD readout signal TRANS and a PD reset signal RSCELL2 and ends at the time when the mechanical shutter is closed. However, the present invention is not limited to this method.

For example, as shown in FIG. 14, it is acceptable that accumulation of electric charge to the PD 122 (64) starts while the mechanical shutter is still open and that the accumulation ends with a pulse of a PD readout signal TRANS or a row selection signal SELECT.

More specifically, while the mechanical shutter is closed, a pulse of a PD readout signal TRANS is applied to the gate of the readout transistor 124 and electric charge accumulated to the PD 122 is discharged. After that, while the mechanical shutter is open, accumulation of electric charge to the PD 122 starts, a pulse of a PD readout signal TRANS is applied to the gate of the readout transistor 124 and the accumulation of electric charge to the PD 122 ends. After that, the mechanical shutter is closed.

Or, while the mechanical shutter is closed, a pulse of a PD reset signal RSCELL2 is applied to the gate of the reset transistor 62; accumulated electric charge to the PD 64 is discharged. After that, while the mechanical shutter is open, accumulation of electric charge to the PD 64 starts. Afterward, a pulse of the row selection signal SELECT is applied to the gate of the row selection transistor 68; accumulation of electric charge to the PD 64 ends. After that, the mechanical shutter is closed.

Like this, a method for ending accumulation of electric charge to PD 122 (64) by a pulse is effective when the mechanical shutter cannot be closed instantly.

Additionally, as is shown in FIG, 15, it is acceptable to control electric charge accumulation time to the PD 122 (64) only by a pulse, not using the mechanical shutter. This method is effective when the mechanical shutter cannot be opened nor closed instantly.

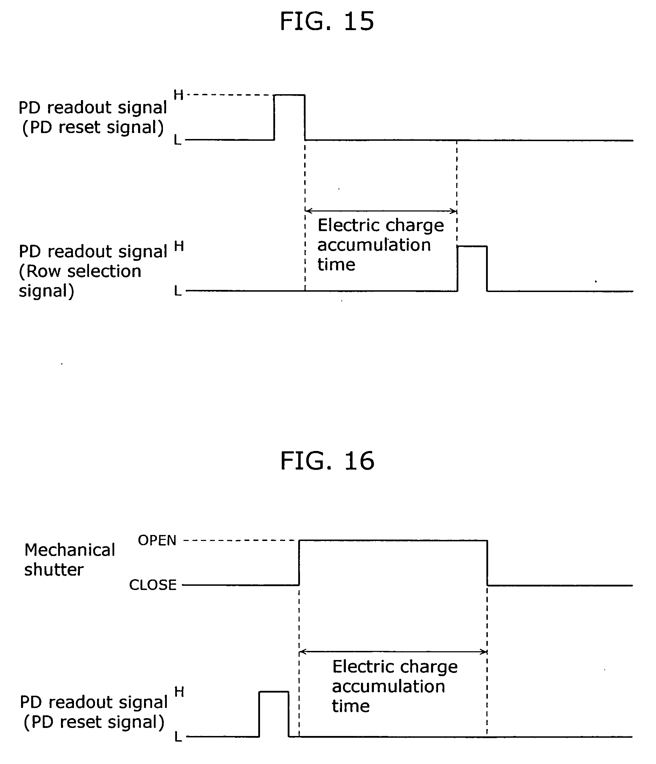

Further, as is shown in FIG. 16, it is satisfactory to control electric charge accumulation time to the PD 122 (64) only by opening and closing of the mechanical shutter, not using a pulse. This method is effective when the mechanical shutter cannot be opened nor closed instantly.

Moreover, according to the First Embodiment, the timings of pulses of a detection region reset signal RSCELL, which is applied to the gate of the reset transistor 126, and a PD readout signal TRANS are aligned. However, the application moment of the pulse of a detection region reset signal RSCELL is not necessarily limited to this, but can be anytime before electric charge accumulated in the PD 122 is read out.

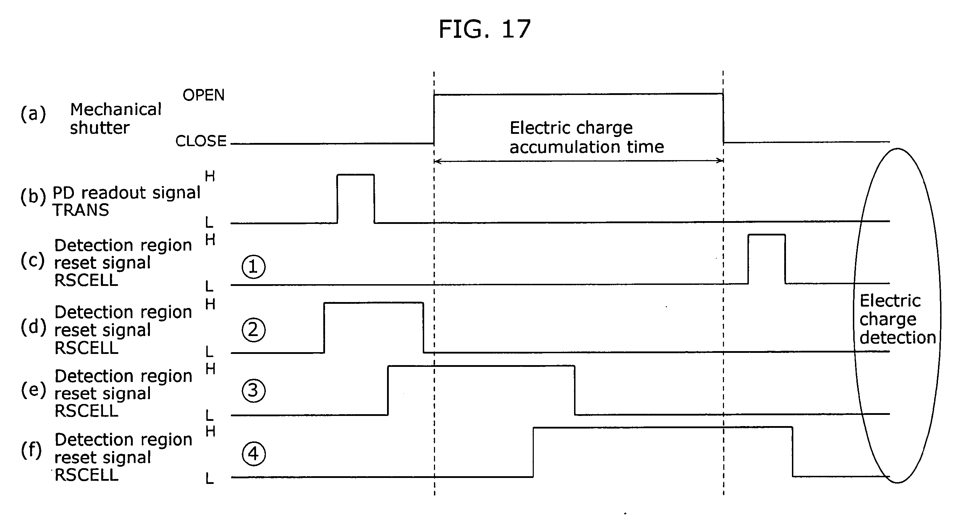

FIG. 17 is a diagram showing a pulse timing of a detection region reset signal RSCELL in a solid-state image sensing apparatus which controls electric charge accumulation time with a mechanical shutter. FIG. 17(a) shows a timing of opening and closing of the mechanical shutter; the time when the mechanical shutter is open is the electric charge accumulation time to PD 122. As is shown in FIG. 17(b), the PD 122 is reset by applying a PD readout signal TRANS to the gate of the readout transistor 124 before electric charge accumulation to PD122 starts.

As is shown in FIG. 17(c), it is acceptable to apply a pulse of a detection region reset signal RSCELL after electric charge accumulation time has passed. Hereby, it is possible to start electric charge accumulation immediately after accumulated electric charge to PD 122 is reset by a pulse of a PD readout signal TRANS.

Additionally, as is shown in FIG. 17(d), it is satisfactory that a detection region reset signal RSCELL is at the High level while the width of the detection region reset signal RSCELL is wider than the width of a pulse of a PD readout signal TRANS and the PD readout signal TRANS is at the High level. By configuring like this, it is possible to discharge completely electric charge accumulated to the PD 122.

Further, as is shown in FIG. 17(e), it is acceptable to apply a pulse of a detection region reset signal RSCELL to the gate of the reset transistor 126 before electric charge accumulation time ends. Hereby, it is possible to reset the electric charge leaked from the PD 122 to the signal detection region 128.

Still further, as is shown in FIG. 17(f), it is satisfactory to apply a detection region reset signal RSCELL, which is at the High level, to the gate of the reset transistor 126 from the time before electric charge accumulation time ends and to the time after the electric charge accumulation time ends. Hereby, it is possible to reset electric charge accumulated in the signal detection region 128 before electric charge accumulated in PD 122 is read out. Hereby, it is possible to detect the accumulated electric charge in PD 122 accurately.

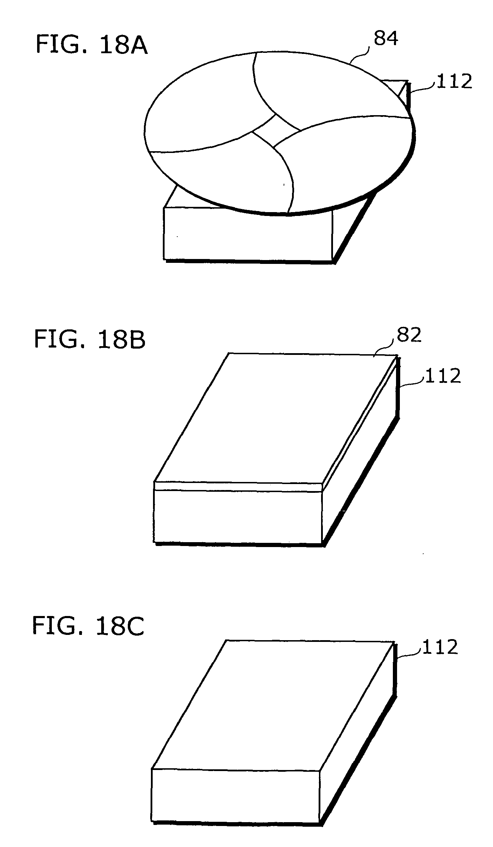

As is shown in FIG. 18A, a mechanical shutter 84 is set up in front of the pixel unit 112 of the solid-state image sensing apparatus explained above but the configuration is not limited to this. For example, a configuration that a liquid crystal shutter 82 is set up in front of the pixel unit 112, as is shown in FIG 18B, is acceptable. A liquid crystal shutter control unit (not illustrated) is set up in the solid-state image sensing apparatus 110 and the liquid crystal shutter control unit controls penetration of light by applying a predetermined voltage to the liquid crystal shutter. Additionally, a configuration that nothing is set up in front of the pixel unit 112, as shown in FIG. 18C, is also acceptable.

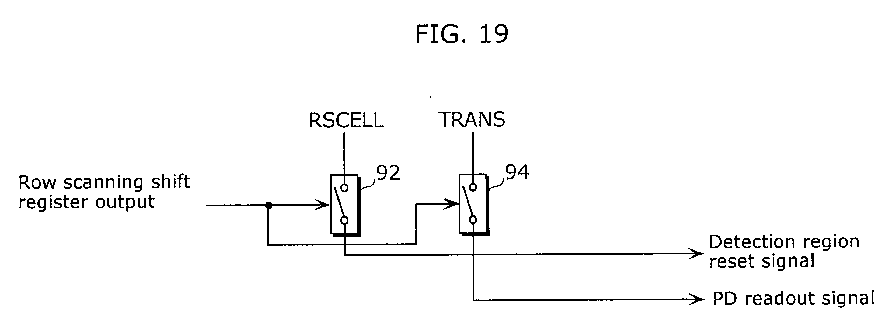

Still further, in the above-mentioned First and Second Embodiments, an NMOS-type transistor is used as a transistor. But it is satisfactory to use a CMOS-type transistor instead of the NMOS-type transistor. By using the CMOS-type transistor, for example, the timing generation circuit 30 shown in FIG. 7 is realized as an equivalent circuit to the circuit shown in FIG. 19.

The timing generation circuit shown in FIG. 19 includes: the first switch 92 that is composed of a CMOS-type transistor through which a detection region reset signal RSCELL passes in response to activated output of the row scanning shift register 114; and the second switch 94 that is composed of a CMOS-type transistor through which the PD readout signal TRANS passes in response to the activated output of the row scanning shift register 114.

Still further, in the First and Second Embodiments, after electric charge is accumulated to the PD122 (64) for all the pixels at the same time, readout to the column scanning shift resister 118 is performed for each row. However, it is also acceptable to prepare a frame memory which can accumulate pixel signals that correspond to one frame of the pixel unit 112 in advance and transmit the pixel signals at once.

Additionally, even if the pixel signals cannot be transmitted to the frame memory at once, it is also acceptable to transmit the pixel signals to the frame memory for each row with extremely high speed which can be negligible compared with electric charge accumulation time and scanning time of one television screen.

Further, it is also satisfactory to read out electric charge accumulated in the PD 122 for all the pixels at once when a pixel has a memory (the signal detection region 128) within the pixel like the pixel shown in FIG. 2.

Moreover, in the First and Second Embodiments, electric charge accumulated in the PDs 122 (64) for all the pixels are reset at once. But it is also acceptable to reset electric charge accumulated in the PDs 122 (64) of pixels in a particular region to be read out at once.

As is described above, the present invention can provide a solid-state image sensing apparatus which can photograph a moving object with no distortion.

In recent years, cellular phones with a function to photograph have been rapidly prevailing. Additionally, fields in which a solid-state image sensing apparatus is used such as a camera which a car is equipped with and a monitor camera have been enlarging increasingly. Therefore, the practical value of the solid-state sensing apparatus according to the present invention is extremely high.

## Claims

1. A solid-state image sensing apparatus that performs photoelectric conversion of incident light, comprising:
a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal;
an electric charge simultaneous removal unit operable to simultaneously remove the accumulated electric charge in the photodiodes laid out in a predetermined region to be read out in the photosensitive unit; and
an electric charge accumulation unit operable to accumulate electric charge in the photodiode laid out in the region to be read out during a predetermined time after the accumulated electric charge in the photodiode that is laid out in the region is removed.

2. The solid-state image sensing apparatus according to Claim 1,
wherein the electric charge accumulation unit generates an electric accumulation start signal to start electric charge accumulation to the photodiode laid out in the region to be read out.

3. The solid-state image sensing apparatus according to Claim 2,
wherein the electric charge accumulation unit generates an electric accumulation end signal and ends electric charge accumulation to the photodiode laid out in the region to be read out in response to activation of the electric charge accumulation end signal.

4. The solid-state image sensing apparatus according to Claim 2, further comprising an incident light control unit operable to control incidence of light into the photosensitive unit,
wherein the electric charge accumulation unit ends electric charge accumulation to the photodiode laid out in the region to be read out using the incident light control unit by blocking out incidence of light into the photosensitive unit.

5. The solid-state image sensing apparatus according to Claim 1, further comprising an incident light control unit operable to control incidence of light into the photosensitive unit,
wherein the electric charge accumulation unit starts incidence of light to the photosensitive unit using the incident light control unit after the electric charge simultaneous removal unit simultaneously removes the accumulated electric charge to the photodiode laid out in the region to be read out.

6. The solid-state image sensing apparatus according to Claim 5,
wherein the electric charge accumulation unit generates an electric accumulation end signal and ends electric charge accumulation to the photodiode laid out in the region to be read out in response to activation of the electric charge accumulation end signal.

7. The solid-state image sensing apparatus according to Claim 5,
wherein the electric charge accumulation unit ends electric charge accumulation to the photodiode laid out in the region to be read out using the incident light control unit by blocking out incidence of light into the photosensitive unit.

8. The solid-state image sensing apparatus according to Claim 5,
wherein the incident light control unit includes:
a liquid crystal shutter that is set up between the photosensitive unit and an object to be photographed; and
a liquid crystal shutter control unit operable to apply a predetermined voltage to the liquid crystal shutter to control penetration of light.

9. The solid-state image sensing apparatus according to Claim 1,
wherein the electric charge simultaneous removal unit simultaneously outputs a reset signal to all the photoelectric conversion circuits laid out in the region to be read out; and
the output circuit in the photoelectric conversion circuit includes:
a first transistor that receives the reset signal from the electric charge simultaneous removal unit and that resets electric charge accumulated in the photodiode in response to activation of said reset signal; and
a second transistor that lets the electric signal pass through, the electric signal according to value of voltage determined by electric charge outputted from the photodiode.

10. The solid-state image sensing apparatus according to Claim 9,
wherein the electric charge simultaneous removal unit generates a gate signal and includes a reset signal passage switch that outputs simultaneously the reset signal to all the photoelectric conversion circuits in response to activation of the gate signal.

11. The solid-state image sensing apparatus according to Claim 9,
wherein the electric charge simultaneous removal unit includes:
a switch transistor that serves as a switch; and
a capacitor that is set up between a gate and a source or a drain of the switch transistor, and
when the capacitor is charged, the reset signal is inputted from the drain of the switch transistor and is outputted simultaneously to all the photoelectric conversion circuits from the source.

12. The solid-state image sensing apparatus according to Claim 1,
wherein the electric charge simultaneous removal unit outputs a readout signal simultaneously and outputs a reset signal to all the photoelectric conversion circuits laid out in the region to be read out, and
the output circuit in the photoelectric conversion circuit includes:
a first transistor that receives the readout signal from the electric charge simultaneous removal unit and lets the electric charge accumulated in the photodiode pass through in response to activation of the readout signal; and
an electric charge retention unit operable to receive the , electric charge that passes through the first transistor and retain said electric charge;
a second transistor that lets the electric signal pass through, the electric signal according to value of voltage determined by the electric charge retained by the electric charge retention unit; and
a reset circuit that receives the reset signal from the electric charge simultaneous removal unit and that resets an amount of electric charge accumulated in the electric charge retention unit in response to activation of the reset signal.

13. The solid-state image sensing apparatus according to Claim 12, further comprising an electric signal readout unit operable to read out the electric signal outputted from the photoelectric conversion circuit laid out in the region to be read out,
wherein the electric signal readout unit includes:
a first unit operable to output the activated reset signal to the reset circuit in the photoelectric conversion circuit laid out in the region to be read out; and
a second unit operable to output the activated readout signal to said reset circuit after outputting said reset signal, and
the first unit outputs the reset signal activated after the predetermined time in the electric charge accumulation unit has passed.

14. The solid-state image sensing apparatus according to Claim 13,
wherein the electric signal readout unit reads out simultaneously accumulated electric charge of the photodiode laid out in the region to be read out.

15. The solid-state image sensing apparatus according to Claim 13, further comprising a frame memory that can store simultaneously all the electric signals outputted from the photoelectric conversion circuit laid out in the region to be read out,
wherein the electric signal readout unit transmits simultaneously to the frame memory the electric signals outputted from the photoelectric conversion circuit laid out in the region to be read out.

16. The solid-state image sensing apparatus according to Claim 13, further comprising the frame memory that can store simultaneously all the electric signals outputted from the photoelectric conversion circuit laid out in the region to be read out,
wherein the electric signal readout unit writes to the frame memory in sequence the electric signals outputted from the photoelectric conversion circuit laid out in the region to be read out within a short period of time which can be negligible compared with the predetermined time in the electric charge accumulation unit.

17. The solid-state image sensing apparatus according to Claim 12, further comprising an electric signal readout unit operable to read out the electric signal outputted from the photoelectric conversion circuit laid out in the region to be read out,
wherein the electric signal readout unit includes:
a first unit operable to output the activated reset signal to the reset circuit in the photoelectric conversion circuit laid out in the region to be read out; and
a second unit operable to output the activated readout signal to said reset circuit after outputting said reset signal, and
the first unit outputs the reset signal activated before the predetermined time in the electric charge accumulation unit has passed.

18. The solid-state image sensing apparatus according to Claim 17,
wherein the first unit outputs the activated reset signal in overlapping time of a period before the predetermined time in the electric charge accumulation unit has passed and a period during which the electric charge simultaneous removal unit outputs the activated reset signal.

19. The solid-state image sensing apparatus according to Claim 12, further comprising an electric signal readout unit operable to read out the electric signal outputted from the photoelectric conversion circuit laid out in the region to be read out,
wherein the electric signal readout unit includes:
a first unit operable to output the activated reset signal to the reset circuit in the photoelectric conversion circuit laid out in the region to be read out; and
a second unit operable to output the activated readout signal to said reset circuit after outputting said reset signal, and
the first unit outputs the activated reset signal for a period since some mid point of the predetermined time until an end of said predetermined time in the electric charge accumulation unit.

20. The solid-state image sensing apparatus according to Claim 12,
wherein the electric charge simultaneous removal unit generates a gate signal and includes a readout signal passage switch that outputs simultaneously the readout signal to all the photoelectric conversion circuits in response to the gate signal.

21. The solid-state image sensing apparatus according to Claim 12,
wherein the electric charge simultaneous removal unit includes:
a switch transistor that serves as a switch; and
a capacitor that is set up between a gate and a source or a drain of the switch transistor, and
when the capacitor is charged, the reset signal is inputted from the drain of the switch transistor and is outputted simultaneously to all the photoelectric conversion circuits from the source.

22. A camera that photographs an object comprising
a solid-state image sensing apparatus; and
a mechanical shutter,
wherein the solid-state image sensing apparatus includes:
a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal;
an electric charge simultaneous removal unit operable to simultaneously remove the accumulated electric charge in the photodiode laid out in a predetermined region to be read out in the photosensitive unit;
an electric charge accumulation unit operable to accumulate electric charge in the photodiode laid out in the region to be read out during a predetermined time after accumulated electric charge in the photodiode that is laid out in the region is removed; and
an incident light control unit operable to control incidence of light into the photosensitive unit,
wherein the mechanical shutter is set up between the photosensitive unit of the solid-state image sensing apparatus and an object to be photographed,
the electric charge accumulation unit ends electric charge accumulation to the photodiode laid out in the region to be read out using the incident light control unit by blocking out incidence of light into the photosensitive unit, and
the incident light control unit controls incidence of light into the photosensitive unit by controlling opening and shutting of the mechanical shutter.

23. An image sensing method for photographing an object using a solid-state sensing apparatus,
wherein the solid-state image sensing apparatus includes a photosensitive unit in which a plurality of photoelectric conversion circuits is laid out one-dimensionally or two-dimensionally, each of said photoelectric conversion circuits corresponding to a pixel and including a photodiode that accumulates electric charge by performing the photoelectric conversion of incident light and an output circuit that outputs the accumulated electric charge as an electric signal, and
the image sensing method comprising the steps of:
simultaneously removing the accumulated electric charge in the photodiode laid out in a predetermined region to be read out in the photosensitive unit; and
accumulating electric charge in the photodiode laid out in the region to be read out during a predetermined time after the accumulated electric charge of the photodiode that is laid out in the region is removed.
